# DEMANDE DE BREVET EUROPEEN

(11) **EP 0 790 449 A2**
(43) Date de publication de la demande: **20.08.1997**
(21) Numéro de dépôt: 97420026.3
(22) Date de dépôt: 13.02.1997
(51) Int. Cl.: F16K 31/06, G05D 7/06

(54) **Electrovanne de régulation pour circuit de fluide, notamment gazeux**

(30) Priorité: 15.02.1996 FR 9602095
(71) Demandeur: EATON S.A.M., MC-98000 Monaco (MC)
(72) Inventeur: Barnoin, David, 06200 Nice (FR); Cutaya, Jacques, 06800 Cagnes Sur Mer (FR)
(74) Mandataire: Bratel, Gérard

(57) **Abrégé**

Cette électrovanne pulsée, à rapport cyclique variable, comprend un corps (2) avec un orifice d'entrée de fluide (3), un orifice de sortie de fluide (5) et une chambre interne (4). L'un des orifices (3,5) est raccordé à la chambre (4) par un court conduit (6) au débouché duquel est formé un siège annulaire (7). L'électro-aimant (8) actionne un noyau mobile magnétique (20) qui porte un clapet (23) en matériau élastique, coopérant avec le siège (7) par l'une de ses faces d'extrémité (24), en position fermée. Son autre face d'extrémité (25) annulaire, vient en butée (en 26) contre la paroi de la chambre interne (4) à l'opposé du siège (7), en position ouverte, ce qui permet d'éliminer le bruit de fonctionnement.

Application : électrovanne de régulation pour appareils de cuisson et de chauffage à gaz.

## Description

La présente invention concerne une électrovanne de régulation, et plus particulièrement une électrovanne pulsée dont le pilotage s'effectue par un signal électrique carré de rapport cyclique variable et de fréquence fixe ou variable, pour circuit fluide notamment gazeux, le débit de fluide, notamment de gaz en sortie de vanne étant proportionnel à la valeur du rapport cyclique. Cette électrovanne de régulation est notamment applicable à des appareils domestiques à gaz, tels que des appareils de cuisson et de chauffage à gaz, pour contrôler le débit de gaz amené aux brûleurs.

De telles électrovannes de régulation doivent fonctionner à des fréquences relativement élevées, et dans le type d'applications ci-dessus indiqué, elles doivent être capables de réaliser, de façon fiable, un très grand nombre de cycles, pouvant être évalué à plusieurs centaines de millions de cycles. Un fonctionnement silencieux est aussi recherché.

Ces objectifs ne sont qu'imparfaitement atteints par les électrovannes de régulation actuellement connues. En particulier, l'ensemble mobile actionné par un électro-aimant, et comprenant le noyau mobile cylindrique ainsi qu'un organe obturateur coopérant avec un siège fixe, possède le plus souvent une masse relativement importante. Cet ensemble mobile décrivant un mouvement oscillant, à la fréquence des impulsions électriques de pilotage de l'électrovanne, il en résulte en cours de fonctionnement des chocs internes générateurs de bruit. En particulier, il peut se produire des chocs par contact direct et non amorti du noyau mobile contre le guide de ce noyau mobile, lorsque l'ensemble mobile précité atteint au cours de son mouvement d'oscillation sa position terminale la plus éloignée du siège fixe. Ces chocs ont pour conséquences, outre la génération de bruits désagréables, une usure et une détérioration de l'électrovanne, qui compromettent sa longévité.

La présente invention vise à remédier à ces inconvénients, en fournissant une électrovanne de régulation pour circuit de fluide notamment gazeux, qui tout en conservant une structure particulièrement simple permet d'éliminer les chocs internes et la plus grande partie du bruit de fonctionnement, et qui possède ainsi, outre un fonctionnement particulièrement silencieux, une fiabilité et une longévité augmentées.

A cet effet, l'invention a pour objet une électrovanne de régulation pour circuit de fluide, notamment gazeux, plus particulièrement une électrovanne pulsée à rapport cyclique variable, comprenant d'une part un corps avec un orifice d'entrée du fluide, un orifice de sortie du fluide et une chambre interne, l'un des orifices étant raccordé à la chambre interne par un court conduit au débouché duquel est formé un siège annulaire, et comprenant d'autre part un électro-aimant avec une bobine et un circuit magnétique fixe montés autour d'un guide central, lequel possède un évidement de forme générale cylindrique, débouchant dans la chambre interne précitée, et recevant un noyau mobile magnétique soumis à l'action d'un ressort de rappel, une extrémité du noyau mobile portant un clapet apte à coopérer avec le siège annulaire, cette électrovanne étant caractérisée en ce que le clapet, réalisé en un matériau élastique, possède une première face d'extrémité sensiblement circulaire ou annulaire, coopérant avec le siège annulaire en position de fermeture de l'électrovanne, et une seconde face d'extrémité sensiblement annulaire, opposée à la précédente, qui en position d'ouverture de l'électrovanne vient en butée contre la paroi de la chambre interne, à l'opposé du siège annulaire.

Ainsi, selon une caractéristique essentielle de la présente invention, la position extrême du noyau mobile qui correspond à la position ouverte de l'électrovanne est définie par la venue en butée d'une pièce en matériau élastique, à savoir le clapet porté par le noyau mobile, et non pas par la butée de pièces rigides, ou par le ressort de rappel ce qui est généralement le cas. Ceci permet de supprimer les chocs et les bruits, et d'épargner le ressort.

Selon une forme de réalisation préférée de l'invention, le guide central, dans l'évidement duquel est monté coulissant le noyau mobile, possède une bride terminale appliquée et fixée contre le corps de l'électrovanne, et délimitant la chambre interne précitée, et il est prévu qu'en position de fermeture de cette électrovanne, le clapet vient en butée par sa face d'extrémité annulaire contre une face de la bride terminale du guide.

Avantageusement, le noyau mobile de l'électrovanne de régulation, objet de l'invention, possède une forme générale cylindrique allongée, l'une de ses extrémités étant conformée en tête sur laquelle est monté et retenu le clapet. L'ensemble mobile possède ainsi une masse limitée.

De toute façon, l'invention sera mieux comprise à l'aide de la description qui suit, en référence au dessin schématique annexé représentant, à titre d'exemple, une forme d'exécution de cette électrovanne de régulation pour circuit de fluide, notamment gazeux :
Figure 1 est une vue d'ensemble, en coupe longitudinale, d'une électrovanne conforme à la présente invention ;
Figure 2 est un schéma de principe mécanique de l'électrovanne de figure 1, en position ouverte ;
Figure 3 est un schéma analogue à celui de la figure 2, mais montrant l'électrovanne en position fermée.

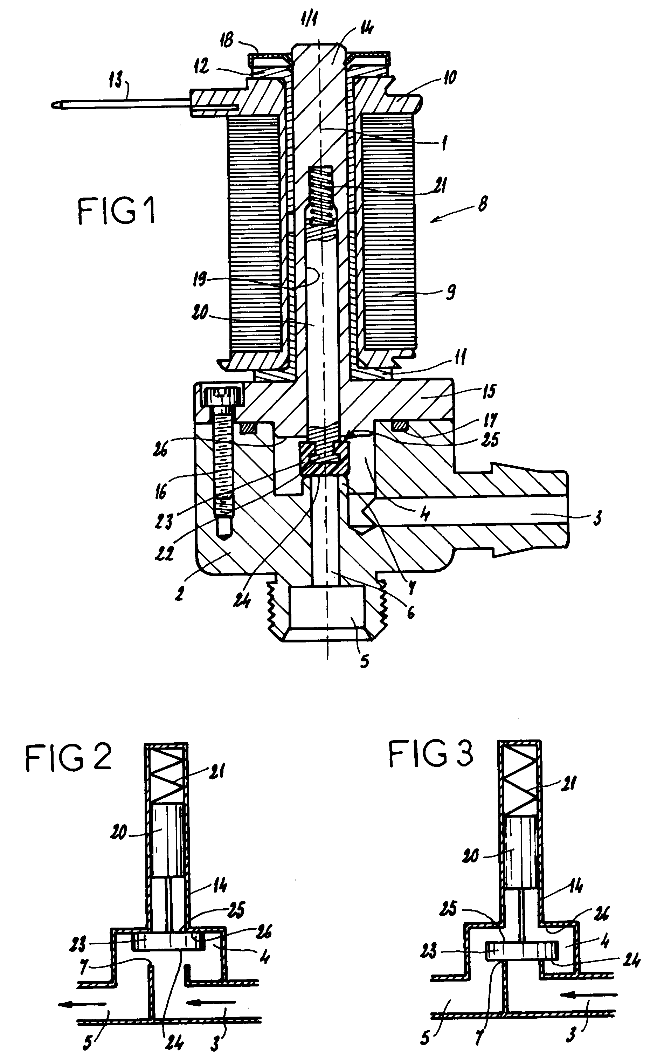

La figure 1 montre une électrovanne de régulation, pour circuit de gaz, dont la plupart des éléments sont disposés suivant un axe central 1. L'électrovanne possède un corps 2, qui comporte un orifice latéral 3 d'entrée du gaz, débouchant dans une chambre interne 4 du corps 2, et un orifice axial 5 de sortie du gaz. L'orifice de sortie 5 est raccordé par un court conduit axial 6 au centre de la chambre interne 4, un siège annulaire 7 étant formé au débouché du conduit 6 dans ladite chambre 4.

Au-dessus du corps 2 de l'électrovanne est disposé l'électro-aimant 8 de celle-ci, qui comprend un enroulement d'excitation 9 placé autour d'une carcasse de bobine 10 isolante, laquelle entoure elle-même un circuit magnétique fixe formé par deux éléments tubulaires opposés 11 et 12. La carcasse de bobine 10 porte les bornes électriques 13 d'alimentation de l'enroulement d'excitation 9.

L'ensemble formé par la bobine 9,10 et par le circuit magnétique 11,12 est disposé autour d'un guide central 14, dont une extrémité élargie forme une bride 15 appliquée contre le corps 2 et fixée à ce corps 2 au moyen de vis 16, avec interposition d'un joint d'étanchéité annulaire 17. L'autre extrémité du guide 14 porte un anneau élastique de retenue 18, appliqué sur l'élément 12 du circuit magnétique fixe.

Le guide central 14 possède, sur une partie de sa longueur, un évidement cylindrique 19 qui débouche dans la chambre 4, à l'opposé du siège annulaire 7. A l'intérieur de l'évidement 19 du guide 14 est monté coulissant suivant l'axe 1 un noyau mobile magnétique 20, de forme générale cylindrique allongée. Un ressort de rappel 21, logé et comprimé au fond de l'évidement 19, agit sur une première extrémité du noyau mobile 20, de manière à pousser celui-ci en direction du corps 2.

L'autre extrémité du noyau mobile 20 se situe à l'intérieur de la chambre 4, et est conformée en tête 22. Sur la tête 22 du noyau mobile 20 est monté et retenu un clapet 23 en matière élastique. Le clapet 23 possède extérieurement une forme générale cylindrique ; il présente ainsi une face d'extrémité 24 circulaire, tournée vers le siège annulaire 7, et présente du côté opposé une autre face d'extrémité 25 annulaire, située en regard d'une face 26 de la bride terminale 15 du guide 14, la face 26 délimitant la chambre interne 4.

Dans la position fermée de l'électrovanne, qui est aussi sa position de repos, le noyau mobile 20 est repoussé par le ressort de rappel 21, et le clapet 23 s'applique ainsi de façon étanche, par sa face d'extrémité circulaire 24, contre le siège annulaire 7. Toute communication est alors interdite entre l'orifice 3 d'entrée du gaz et l'orifice 5 de sortie du gaz - voir les figures 1 et 3.

Dans la position ouverte de l'électrovanne (figure 2), le noyau mobile 20 attiré par l'électro-aimant 8 est rentré plus profondément dans l'évidement 19, en comprimant davantage le ressort de rappel 21, et le clapet 23 est ainsi soulevé du siège annulaire 7. Une communication est alors possible entre l'orifice 3 d'entrée du gaz et l'orifice 5 de sortie du gaz, en passant par la chambre 4.

Selon une caractéristique importante, en position ouverte, le clapet 23 est appliqué par sa face d'extrémité annulaire 25 contre la face 26 de la bride terminale 15 du guide 14, alors que le noyau mobile 20 ne vient pas du tout en butée contre la paroi de l'évidement 19 du guide 14.

En cours de fonctionnement de l'électrovanne de régulation, le noyau mobile 20 oscille entre la position fermée et la position ouverte, d'une manière cyclique et à une fréquence donnée, en fonction des impulsions de courant amenées à l'enroulement d'excitation 9. En particulier, ces impulsions peuvent posséder un rapport cyclique (durée d'une impulsion / période du cycle) qui est variable, la fréquence elle-même étant fixe et ayant une valeur comprise par exemple entre 20 et 25 Hz. Le rapport cyclique peut ainsi varier de 0 à 100 %, et le débit de gaz à l'orifice de sortie 5 de l'électrovanne est proportionnel à la valeur du rapport cyclique, puisque celui-ci représente aussi le rapport entre le temps d'ouverture de l'électrovanne et la période du cycle.

Au cours du mouvement d'oscillation du noyau mobile 20 entre la position fermée et la position ouverte, le clapet 23 vient buter alternativement contre le siège annulaire 7, par sa face d'extrémité circulaire 24, et contre la bride terminale 15 du guide 14, par sa face d'extrémité annulaire 25. Le clapet 23 étant réalisé en un caoutchouc synthétique, les chocs de l'ensemble mobile "noyau mobile 20 + clapet 23", non seulement contre le siège annulaire 7 mais aussi contre le guide 14, se trouvent fortement amortis, ce qui élimine les bruits. Les impacts sont ici d'autant plus faibles que l'ensemble mobile, actionné par l'électro-aimant 8, possède une masse limitée.

Il va de soi que l'invention ne se limite pas à la seule forme d'exécution de cette électrovanne de régulation qui a été décrite ci-dessus, à titre d'exemple ; elle en embrasse, au contraire, toutes les variantes de réalisation et d'application respectant le même principe. C'est ainsi, notamment, que l'on se s'éloignerait pas du cadre de l'invention par des modifications constructives de détail ou par des changements de matière, ou encore par une utilisation de la même électrovanne de régulation dans un circuit de liquide.

## Revendications

1. Electrovanne de régulation pour circuit de fluide, notamment gazeux, plus particulièrement électrovanne pulsée à rapport cyclique variable, comprenant d'une part un corps (2) avec un orifice d'entrée du fluide (3), un orifice de sortie du fluide (5) et une chambre interne (4), l'un des orifices (3,5) étant raccordé à la chambre interne (4) par un court conduit (6) au débouché duquel est formé un siège annulaire (7), et comprenant d'autre part un électro-aimant (8) avec une bobine (9,10) et un circuit magnétique fixe (11,12) montés autour d'un guide central (14,15), lequel possède un évidement (19) de forme générale cylindrique, débouchant dans la chambre interne (4) précitée, et recevant un noyau mobile magnétique (20) soumis à l'action d'un ressort de rappel (21), une extrémité (22) du noyau mobile (20) portant un clapet (23) apte à coopérer avec le siège annulaire (7), caractérisée en ce que le clapet (23), réalisé en un matériau élastique, possède une première face d'extrémité (24) sensiblement circulaire ou annulaire, coopérant avec le siège annulaire (7) en position de fermeture de l'électrovanne, et une seconde face d'extrémité (25) sensiblement annulaire, opposée à la précédente, qui en position d'ouverture de l'électrovanne vient en butée contre la paroi (26) de la chambre interne (4), à l'opposé du siège annulaire (7).

2. Electrovanne de régulation pour circuit de fluide selon la revendication 1, caractérisée en ce que le guide central (14), dans l'évidement (19) duquel est monté coulissant le noyau mobile (20), possède une bride terminale (15) appliquée et fixée contre le corps (2), et délimitant la chambre interne (4) précitée, et en ce qu'en position de fermeture de l'électrovanne, le clapet (23) vient en butée par sa face d'extrémité annulaire (25) contre une face (26) de la bride terminale (15) du guide (14).

3. Electrovanne de régulation pour circuit de fluide selon la revendication 1 ou 2, caractérisée en ce que le noyau mobile (20) possède une forme générale cylindrique allongée, l'une de ses extrémités étant conformée en tête (22) sur laquelle est monté et retenu le clapet (23).
